# EUROPÄISCHE PATENTSCHRIFT

(11) **EP 2 030 751 B1**
(45) Veröffentlichungstag und Bekanntmachung des Hinweises auf die Patenterteilung: **17.08.2011**
(21) Anmeldenummer: 08102298.0
(22) Anmeldetag: 05.03.2008
(51) Int. Cl.: B29C 33/60, C10M 111/02

(54) **Flüssiges Trennmittel und seine Verwendung**
Fluid separating agent and his use
Produit de séparation liquide et son utilisation

(30) Priorität: 30.08.2007 DE 102007041255; 07.09.2007 DE 102007042548
(43) Veröffentlichungstag der Anmeldung: 04.03.2009
(73) Patentinhaber: Riepe, Angelika, 32257 Bünde (DE); Riepe, Hans, 32257 Bünde (DE)
(72) Erfinder:
(74) Vertreter: Dantz, Jan Henning

(56) Entgegenhaltungen:
- DE-U1-202006 003 378
- US-A- 4 155 770
- ANONIMOUS: "Dynamic, Absolute and Kinematic Viscosity" THE ENGINEERING TOOLBOX, [Online] 2005, Seiten 1-6, XP002530315 Gefunden im Internet: URL:http://www.engineeringtoolbox.com/dyna mic-absolute-kinematic-viscosity-d_412.htm l> [gefunden am 2009-06-02]
- ANONIMOUS: "Klearol White mineral Oil" PRODUCT DATA SHEET SONNEBORN, [Online] 19. Dezember 2005 (2005-12-19), Seite 1, XP002530636 Gefunden im Internet: URL:http://www.sonneborn.com/european_prod ucts/pdf/PDS-Klearol.pdf> [gefunden am 2009-06-04]

## Beschreibung

Die Erfindung betrifft ein flüssiges Trennmittel zum Auftragen auf den mittels eines Klebers oder Leim mit einer Beschichtung versehenen oder zu versehenden Kantenbereich einer Platte, insbesondere einer Möbelplatte, mit einem Zusatz von Mineralöl.

Ein derartiges Trennmittel ist aus der DE 203 14 849 U1 sowie der DE 20 2006 003 378 U1 bekannt. Prinzipiell haben sich diese Trennmittel in der Praxis bewährt.

Dabei finden sie bevorzugt Verwendung, um ein Anhaften von Klebstoff oder Leimresten an der Möbelplatte zu verhindern, wenn deren Kante mit einem Kantenband beschichtet wird.

Allerdings sind Anwendungsbereiche bekannt geworden, in denen die bekannten Trennmittel nicht zu einem optimalen Ergebnis führen.

Um ein für den gedachten Einsatzzweck gebrauchsfertiges Trennmittel zu erhalten, wird als Lösemittel Spezialbenzin eingesetzt, so dass das Trennmittel zusammen mit dem Mineralöl als Lösung vorliegt.

Der Einsatz des Spezialbenzins als Lösemittel erfordert jedoch vor allem hinsichtlich des Arbeitsschutzes entsprechende Maßnahmen, wie Absaugungen oder dergleichen.

Gemäß dem Euro-Sicherheitsdatenblatt für flüssige Trennmittel mit einem Anteil an Spezialbenzin, führt das bekannte Trennmittel zu Hautreizungen, schädlichen Wirkungen in Gewässern, da giftig für Wasserorganismen, zu Gesundheitsschäden, insbesondere Lungenschäden beim Verschlucken des Trennmittels oder zu einem Eintreten von Schläfrigkeit und Benommenheit, wenn die Benzindämpfe eingeatmet werden.

Daneben hat das Spezialbenzin aber auch Wirkungen auf die verschiedenen Teile der Bearbeitungsmaschinen, in denen das bekannte Trennmittel über Sprüheinrichtungen zum Einsatz kommt. So sind durch das Spezialbenzin verursachte Verformungen an Transportbändern zu beobachten, die zu einer Verdickung von Kettenplatten führen, wodurch der Betriebsablauf gestört und die Qualität der Plattenbearbeitung beeinträchtigt wird.

In der US-A-4155770 ist ein Lecithin-basierendes Pfannenspray offenbart, das vier verschiedene Bestandteile aufweist, die unbedingt vorhanden sein müssen. Dabei handelt es sich um Lecithin, weißes Mineralöl, Pflanzenöl und Ethanol oder Isopropanol.

Der Erfindung liegt die Aufgabe zugrunde, ein Trennmittel der gattungsgemäßen Art so weiterzuentwickeln, dass seine Verwendungsfähigkeit verbessert wird.

Diese Aufgabe wird durch ein Trennmittel mit den Merkmalen des Anspruchs 1 gelöst.

Wie sich überraschend gezeigt hat, kann durch die Verwendung eines Mineralöls mit einer niedrigen Viskosität, gemäß der Erfindung ≥ 2,5 bis ≤ 35 mm²/s bei 20°C nach DIN 51562, auf den Einsatz von Benzin bzw. Spezialbenzin vollständig verzichtet werden.

Das dem alkoholischen Lösemittel zugesetzte Mineralöl, vorzugsweise ein Weißöl, hat nach einer vorteilhaften Ausbildung der Erfindung eine Viskosität von ≥ 3 bis ≤18, insbesondere ≥ 5 bis ≤ 7, bevorzugt etwa 6,3 mm²/s.

Während bei dem bislang eingesetzten Mineralöl mit entsprechend höherer Viskosität zur Lösung auch eines zugesetzten Alkohols in jedem Fall Spezialbenzin zugefügt werden muss, löst sich das alkoholische Lösemittel nun vollständig in dem Mineralöl bzw. wird eine Lösung aus Mineralöl und alkoholischem Lösemittel hergestellt.

Bevorzugt besteht dabei das alkoholische Lösemittel aus Ethanol, das in einer Konzentration von vorzugsweise 85 % bis 99 % vorliegt, während das niedrig viskose Mineralöl als Trägerfluid dann in einer Konzentration von 15 % bis 1 % vorhanden ist.

Der nun mögliche Verzicht auf den Einsatz von Spezialbenzin führt zu einer geringeren Konzentration an Kohlenwasserstoffen in der Atemluft, so dass eine signifikante Verbesserung der Arbeitsbedingungen gegeben ist, wozu auch eine wesentlich geringer entfettende bzw. reizende Wirkung auf die Haut des Arbeitspersonals zählt.

Im Grunde hat das neue flüssige Trennmittel im wesentlichen keine umweltgefährdenden Bestandteile mehr, was naturgemäß einen einfacheren Produktionsablauf sowie eine einfachere maschinelle Ausrüstung zur Folge hat, da auf entsprechende Absauganlagen insoweit verzichtet werden kann. Die Wirkungen entsprechend dem genannten Euro-Sicherheitsdatenblatt treten nun nicht mehr ein.

Darüber hinaus erhöht sich beim Einsatz des neuen Trennmittels die Standzeit der Maschinen zur Plattenherstellung, da der im Betrieb zwangsläufige Kontakt mit dem Trennmittel nicht mehr zu den eingangs beschriebenen Nachteilen hinsichtlich Verformungen an Transportbändern durch das eingesetzte Spezialbenzin führt.

## Patentansprüche

1. Flüssiges Trennmittel zum Auftragen auf den mittels eines Klebers oder Leim mit einer Beschichtung versehenen oder zu versehenden Kantenbereich einer Platte, insbesondere einer Möbelplatte, mit einem Zusatz von Mineralöl, **dadurch gekennzeichnet, dass** das in einer Konzentration von 15 % - 1 % vorhandene Mineralöl eine Viskosität gemäß DIN 51262 bei 20° C von ≥ 2,5 bis ≤ 35 mm²/s aufweist und einem in einer Konzentration von 85 % - 99 % vorliegenden alkoholischen Lösemittel zugesetzt ist.

2. Flüssiges Trennmittel nach Anspruch 1, **dadurch gekennzeichnet, dass** die Viskosität des Mineralöls ≥ 3 bis ≤ 18 mm²/s ist.

3. Flüssiges Trennmittel nach Anspruch 1, **dadurch gekennzeichnet, dass** die Viskosität des Mineralöls ≥ 2,5 bis ≤ 11 mm²/s ist.

4. Flüssiges Trennmittel nach Anspruch 1, **dadurch gekennzeichnet, dass** die Viskosität des Mineralöls ≥ 5 bis ≤ 7 mm²/s ist.

5. Flüssiges Trennmittel nach Anspruch 1, **dadurch gekennzeichnet, dass** das alkoholische Lösemittel Ethanol ist.

6. Flüssiges Trennmittel nach einem der vorhergehenden Ansprüche, **dadurch gekennzeichnet, dass** das Mineralöl ein Weißöl ist.

7. Verwendung eines flüssigen Trennmittels nach Anspruch 1 zum Auftragen auf den mittels eines Klebers oder Leim mit einer Beschichtung versehenen oder zu versehenden Kantenbereich einer Platte, insbesondere einer Möbelplatte.

## Claims

1. Liquid release agent for application to the edge region, which is provided or is to be provided with a coating by means of an adhesive or glue, of a panel, more particularly of a furniture panel, with an addition of mineral oil, **characterized in that** the mineral oil, which is present at a concentration of 15% - 1%, has a viscosity in accordance with DIN 51262 at 20°C of ≥ 2.5 to ≤ 35 mm²/s and is added to an alcoholic solvent which is present at a concentration of 85% - 99%.

2. Liquid release agent according to Claim 1, **characterized in that** the viscosity of the mineral oil is ≥ 3 to ≤ 18 mm²/s.

3. Liquid release agent according to Claim 1, **characterized in that** the viscosity of the mineral oil is ≥ 2.5 to ≤ 11 mm²/s.

4. Liquid release agent according to Claim 1, **characterized in that** the viscosity of the mineral oil is ≥ 5 to ≤ 7 mm²/s.

5. Liquid release agent according to Claim 1, **characterized in that** the alcoholic solvent is ethanol.

6. Liquid release agent according to any of the preceding claims, **characterized in that** the mineral oil is a white oil.

7. Use of a liquid release agent according to Claim 1 for application to the edge region, which is provided or is to be provided with a coating by means of an adhesive or glue, of a panel, more particularly of a furniture panel.

## Revendications

1. Agent de séparation liquide, destiné à être déposé sur la zone de chant d'un plateau, munie ou à munir d'un revêtement au moyen d'un produit adhésif ou colle, en particulier un plateau de meuble, contenant une addition d'huile minérale, **caractérisé en ce que** l'huile minérale, contenue selon une concentration de 15 % à 1 %, possède à 20 °C une viscosité selon DIN 51262 de ≥ 2,5 à ≤ 35 mm²/s et est ajoutée à un solvant à base d'alcool, présent dans une concentration de 85 % à 99 %.

2. Agent de séparation liquide selon la revendication 1, **caractérisé en ce que** la viscosité de l'huile minérale est de ≥ 3 à ≥ 18 mm²/s.

3. Agent de séparation liquide selon la revendication 1, **caractérisé en ce que** la viscosité de l'huile minérale est de ≥ 2,5 à ≤ 11 mm²/s.

4. Agent de séparation liquide selon la revendication 1, **caractérisé en ce que** la viscosité de l'huile minérale est de ≥ 5 à ≤ 7 mm²/s.

5. Agent de séparation liquide selon la revendication 1, **caractérisé en ce que** le solvant à base d'alcool est de l'éthanol.

6. Agent de séparation liquide selon l'une quelconque des revendications précédentes, **caractérisé en ce que** l'huile minérale est une huile blanche.

7. Utilisation d'un agent de séparation liquide selon la revendication 1, destiné à être déposé sur la zone de chant d'un plateau, munie ou à munir d'un revêtement au moyen d'un produit adhésif ou colle, en particulier un plateau de meuble.
